# EUROPÄISCHE PATENTSCHRIFT

(11) **EP 2 170 605 B1**
(45) Veröffentlichungstag und Bekanntmachung des Hinweises auf die Patenterteilung: **17.08.2011**
(21) Anmeldenummer: 08773745.8
(22) Anmeldetag: 28.06.2008
(51) Int. Cl.: B32B 27/32, B29C 51/16, G09F 3/04

(54) **ETIKETTENFOLIE FÜR TIEFZIEHVERFAHREN**
LABEL FILM FOR DEEP-DRAW PROCESSES
FEUILLE À ÉTIQUETTES POUR PROCÉDÉ D'EMBOUTISSAGE

(30) Priorität: 18.07.2007 DE 102007033371
(43) Veröffentlichungstag der Anmeldung: 07.04.2010
(73) Patentinhaber: Treofan Germany GmbH & Co.KG, 66539 Neunkirchen (DE)
(72) Erfinder: ROTH, Mathias, 66482 Zweibrücken (DE); KOCHEM, Karl-Heinz, 66539 Neunkirchen (DE); TEWS, Wilfrid, 66894 Bechhofen (DE); MUELLER, Axel, 66113 Saarbrücken (DE)
(74) Vertreter: Luderschmidt, Schüler & Partner
(86) Internationale Anmeldenummer: PCT/EP2008/005302
(87) Internationale Veröffentlichungsnummer: WO 2009/010178

(56) Entgegenhaltungen:
- EP-A- 0 538 747
- EP-A- 0 695 630
- EP-A- 0 775 574
- WO-A-02/45956
- WO-A-2006/040057

## Beschreibung

Die vorliegende Erfindung betrifft die Verwendung einer biaxial orientierten Polypropylenfolie als In-Mould-Etikett beim Tiefziehen.

Etikettenfolien umfassen ein umfangreiches und technisch komplexes Gebiet. Man unterscheidet verschiedene Etikettiertechniken, welche hinsichtlich der Prozeßbedingungen grundverschieden sind und zwangsläufig an die Etikettenmaterialien unterschiedliche technische Anforderungen stellen. Allen Etikettierprozeßen ist gemeinsam, daß als Endergebnis optisch ansprechend etikettierte Behältnisse resultieren müssen, bei denen eine gute Haftung auf dem etikettierten Behältnis gewährleistet sein muß.

Bei den Etikettierverfahren werden sehr verschiedene Techniken zum Applizieren des Etiketts angewendet. Man unterscheidet zwischen Selbstklebeetiketten, Rundumetiketten, Schrumpfetiketten, In-Mould Etiketten, Patch Labelling etc. Die Verwendung einer Folie aus thermoplastischem Kunststoff als Etikett ist in allen diesen verschiedene Etikettierverfahren möglich.

Auch beim In-Mould Etikettieren wird zwischen verschiedenen Techniken unterschieden, bei denen verschiedene Verfahrensbedingungen angewendet werden. Allen In-Mould Etikettierverfahren ist gemeinsam, daß das Etikett am eigentlichen Formgebungsverfahren des Behälters teilnimmt und währenddessen appliziert wird. Hierbei kommen jedoch sehr verschiedene Formgebungsverfahren zum Einsatz, wie beispielsweise Spritzgußverfahren, Blasformverfahren, Tiefziehverfahren.

Beim Spritzgußverfahren wird ein Etikett in die Spritzgußform eingelegt und von einem schmelzeflüssigen Kunststoff hinterspritzt. Durch die hohen Temperaturen und Drücke verbindet sich das Etikett mit dem Spritzgußteil und wird zum integralen, nicht ablösbaren Bestandteil des Spritzlings. Nach diesem Verfahren werden beispielsweise Becher und Deckel von Eiscreme- oder Margarinebechern hergestellt.

Hierbei werden einzelne Etiketten einem Stapel entnommen oder von einer Rolle zugeschnitten und in die Spritzgußform eingelegt. Die Form ist dabei so gestaltet, daß der Schmelzestrom hinter das Etikett gespritzt wird und die Vorderseite der Folie an der Wandung der Spritzgußform anliegt. Beim Spritzen verbindet sich die heiße Schmelze mit dem Etikett. Nach dem Spritzen öffnet sich das Werkzeug, der Spritzling mit Etikett wird ausgestoßen und kühlt ab. Im Ergebnis muß das Etikett faltenfrei und optisch einwandfrei auf dem Behälter haften.

Beim Spritzen liegt der Einspritzdruck in einem Bereich von 300 bis 600 bar. Die zum Einsatz kommenden Kunststoffe haben einen Schmelzflußindex von um die 40 g/10min. Die Einspritztemperaturen hängen von dem eingesetzten Kunststoff ab. In manchen Fällen wird die Form zusätzlich gekühlt und ein Verkleben des Spritzlings mit der Form zu vermeiden.

Auch beim Blasformen von Behältern oder Hohlkörpern ist eine direkte In-Mould Etikettierung möglich. Bei diesem Verfahren wird ein Schmelzeschlauch durch eine Ringdüse vertikal nach unten extrudiert. Ein vertikal geteiltes Formwerkzeug fährt zusammen und umschließt den Schlauch, der dabei am unteren Ende zugequetscht wird. Am oberen Ende wird ein Blasdom eingeführt durch den die Öffnung des Formlings ausgebildet wird. Über den Blasdom wird dem warmen Schmelzeschlauch Luft zugeführt, so daß er sich ausdehnt und sich an die Innenwände des Formwerkzeugs anlegt. Hierbei muß sich das Etikett mit dem zähflüssigen Kunststoff des Schmelzeschlauchs verbinden. Anschließend wird die Form geöffnet und der Überstand an der geformten Öffnung abgeschnitten. Der geformte und etikettierte Behälter wird ausgestoßen und kühlt ab.

Bei diesen Blasformverfahren beträgt der Druck beim Aufblasen des Schmelzeschlauchs ca. 4-15 bar und die Temperaturen sind wesentlich niedriger als beim Spritzgießen. Die Kunststoffmaterialien haben einen niedrigeren MFI als beim Spitzgießen, um einen formstabilen Schmelzeschlauch zu bilden und verhalten sich daher beim Abkühlungsprozeß anders als die niederviskosen Materialien für das Spritzgießen.

Beim Tiefziehen werden unorientierte dicke Kunststoffplatten, meist gegossenes PP oder PS (Polystyrol), in einer Dicke von ca. 200 - 750 µm erwärmt und mittels Vakuum oder Stempelwerkzeugen in ein entsprechendes Formwerkzeug gezogen oder gedrückt. Auch hierbei wird das einzelne Etikett in die Form eingelegt und verbindet sich beim Formprozeß mit dem eigentlichen Behälter. Es kommen erheblich niedrigere Temperaturen zur Anwendung, so daß die Haftung des Etiketts an dem Behälter ein kritischer Faktor sein kann. Die gute Haftung muß auch bei diesen niedrigen Verarbeitungstemperaturen gewährleistet sein. Die Verarbeitungsgeschwindigkeiten dieses Verfahrens sind niedriger als beim Spritzguß.

Grundsätzlich können auch beim Tiefziehen Folien aus thermoplastischen Kunststoffen zur Etikettierung der Behältnisse beim Formen eingesetzt werden. Die Folien müssen hierzu ein ausgewähltes Eigenschaftsprofil aufweisen, um zu gewährleisten, daß sich die Etikettenfolie und der tiefgezogene Formkörper glatt und blasenfrei während des Tiefziehens aneinander schmiegen und sich miteinander verbinden.

Häufig ist die Haftung des Etiketts auf dem Behälter mangelhaft, da beim Tiefziehen vergleichsweise niedrigere Temperaturen und Drücke als bei Spritzguß- oder Blasformverfahren Anwendung finden. Des weiteren treten ähnlich wie beim Blasformen Lufteinschlüsse zwischen Etikett und Behälter auf, welche die Optik des etikettierten Behälters als auch die Haftung beeinträchtigen. Daher sind Etiketten für Tiefziehanwendungen mit speziellen Haftschichten ausgerüstet, welche eine gute Haftung auf dem Behälter gewährleisten.

Eine derartige Folie ist beispielsweise in WO 02/45956 beschrieben. Die Deckschicht dieser Folie weist verbesserte Hafteigenschaften gegenüber verschiedensten Materialien auf. Die Deckschicht enthält als Hauptkomponente ein Co- oder Terpolymeres aus einem Olefin und ungesättigten Carbonsäuren oder deren Estern. Es ist beschrieben, daß auf Grund der verbesserten Haftung diese Folie auch als Etikett beim Tiefziehen eingesetzt werden kann.

WO 2006/040057 beschreibt die Verwendung einer biaxial orientierten Folie mit einer mikroporösen Schicht als Etikett beim Tiefziehen. Die mikroporöse Schicht enthält ein Propylenpolymeres und mindestens ein β-Nukleierungsmittel. Die Mikroporosität wird durch Umwandlung von β-kristallinem Polypropylen beim Verstrecken der Folie erzeugt. Die poröse Struktur der Folie vermeidet Lufteinschlüsse. Die Haftung der Folie ist überraschend gut. Daher kann die poröse Folie vorteilhaft beim Tiefziehen eingesetzt werden.

Die WO 98/32598 beschreibt ein In-Mold Etikett, welches mindestens zwei Schichten umfaßt, eine siegelfähige Deckschicht und eine Basisschicht. Die Siegelschicht ist auf der Oberfläche der Basisschicht aufgebracht und enthält ein Polyolefin, mit einer Schmelztemperatur von weniger als 110°C. 25% oder weniger dieses Polyolefins sollen bei einer Temperatur von unter 50°C schmelzen. Es ist nicht explizit erwähnt, daß diese Folie auch bei Tiefziehverfahren eingesetzt werden kann. Die Deckschicht kann aus einer großen Vielzahl von verschiedenen Polymeren ausgewählt werden.

EP 0 889 831 beschreibt ein In-Mold Etikett, welches mindestens zwei Schichten umfaßt. Eine erste Schicht ist eine Heißsiegel-Schicht, welche bei einer Temperatur von 57 bis 100°C aktivierbar sein soll. Die zweite Schicht enthält Vakuolen und ein nichtsphärisches vakuoleninitierendes Teilchen. Die Folie soll eine thermische Leitfähigkeit von weniger als 5,23 * 10⁻⁷ KJ/sec cm * °C (1,25 * 10⁻⁴ kcal/sec cm* °C) aufweisen. Als Beispiel für

In-Mold Verfahren ist nur das Blasformen erwähnt. Tiefzieh-Anwendungen gehen aus der Schrift nicht explizit hervor. Die Schrift erläutert nicht, was unter der Aktivierungstemperatur zu verstehen ist.

US 6,764,760 beschreibt In-Mold Etiketten aus mehrschichtigen Folien, welche eine Basisschicht, eine Zwischenschicht und eine siegelfähige Deckschicht aufweisen. Als Beispiele für In-Mold Verfahren sind Blasformen, Spritzgießen und Tiefziehen erwähnt. Die siegelfähige Schicht soll zur Vermeidung von Blasen geprägt sein. Die Siegelschicht ist aus Polyethylen mit einem Schmelzpunkt von 50 - 130°C aufgebaut. Gegebenfalls können zusätzlich modifizierte Polymere, wie z.B. EVA oder Acrylat-modifizierte Polymere in der siegelfähigen Deckschicht enthalten sein.

Im Stand der Technik sind verschiedenste Folien beschrieben, welche generell als In-Mold Etiketten eingesetzt werden können. In den offenbarten Lehren wird häufig nicht zwischen den verschiedenen Formgebungsverfahren unterschieden und somit gelehrt, daß die In-Mold Etiketten austauschbar und gleichwertig in den verschiedenen Verfahren eingesetzt werden können. Im Rahmen der vorliegenden Erfindung wurde gefunden, daß dies durchaus nicht der Fall ist. Beilspielsweise gibt es Folien, die im Spritzguß hervorragend funktionieren, aber beim Blasformen wegen zu vieler Blasen und schlechter Haftung nicht eingesetzt werden können. Folien, die beim Blasformen funktionieren zeigen eine zu geringe Haftung bei den Tiefziehverfahren. Jedes Formgebungsverfahren erfordert im Prinzip eine spezielle Folie, deren Eigenschaften auf die genauen Bedingungen bei der jeweiligen Anwendung optimiert sind.

Im allgemeinen geht der Fachmann davon aus, daß die Anwendungen in der Reihenfolge Spritzgießen, Blasformen, Tiefziehen zunehmend kritischer hinsichtlich Blasenbildung und Haftung werden, da die Bedingungen beim Formen des Behälters in dieser Reihenfolge "moderater" werden. Beim Tiefziehen kommen die niedrigsten Temperaturen und die niedrigsten Drücke zur Anwendung, so daß die Anforderungen hinsichtlich Etiketten-Haftung und Blasen-Freiheit von den gängigen In-Mold Etiketten bei Tiefziehanwendungen nicht mehr erfüllt werden. Daher hat sich bis heute in der Praxis die In-Mold Etikettierung beim Tiefziehen nicht durchgesetzt. In der Praxis werden tiefgezogene Behältnisse entweder direkt bedruckt oder mit einem Wrap-Around Etikett versehen.

Die wenigen bekannten Lösungen, die technisch die Anforderungen erfüllen, beinhalten aufwendige Maßnahmen zur Herstellung der Folie und sind daher schlichtweg zu teuer, um Direktdruck oder Wrap-Around Etiketten zu substituieren. Die Acrylat-modifizierten Polymeren gemäß WO 02/45956 haben eine so starke Haftung und Klebrigkeit, daß die Folie bei der Herstellung zu stark zum Verkleben auf den Walzen neigt und durch zu starkes Verblocken auf dem Wickel häufig völlig unbrauchbar wird. Zusätzlich läßt sich die Folie, wenn die Verarbeitung zum Etikettenstapel gelingt, nicht gut entstapeln. Versuche, die Klebkraft durch Abmischungen oder Zusatzstoffe soweit zu reduzieren, daß die Folie bei der Herstellung, Verarbeitung und Anwendung gehandhabt und entstapelt werden kann, beeinträchtigen die Haftkraft derart, so daß die Folie für die Tiefzieh-Anwendung nicht mehr geeignet ist, da die Haftung gegenüber dem Behälter zu gering ist

Die poröse Folie gemäß WO 2006/040057 kann nur mit extrem langsamen Produktionsgeschwindigkeiten hergestellt werden, da die β-Kristallite nur durch langsame Abkühlung der extrudierten Schmelze in ausreichender Menge entstehen. Die Folie gemäß US 6,764,760 funktioniert für die Tiefzieh-Anwendung nur mit der vorgeschlagenen Prägung, welche als zusätzliche Verarbeitung die Folie auch verteuert.

Die bekannten Lösungen, die speziell für Tiefziehen entwickelt wurden, beruhen somit auf einer extremen Klebrigkeit der Folien-Oberfläche oder auf extremen Oberflächenrauheiten, bzw. speziellen Oberflächen-Strukturen. Es besteht weiterhin Bedarf eine Folie zur Verfügung zu stellen, die für In-Mold Etikettieren beim Tiefziehen geeignet ist und die Anforderungen hinsichtlich Haftung, Entstapelbarkeit und Blasenfreiheit erfüllt und mit den gängigen kostengünstigen Folienherstellungsprozeßen produziert werden kann.

Diese Aufgabe wird gelöst durch die Verwendung einer mehrschichtigen opaken biaxial orientierten Polyolefinfolie als In-Mold Etikett beim Tiefziehen aus einer vakuolenhaltigen Basisschicht und mindestens einer inneren Deckschicht, welche mindestens 30 - 95 Gew.-% eines Co- und/oder Terpolymeren I mit einem Siegelanspringtemperatur I von 70 - 105°C und 5 bis 70 Gew.% eines unverträglichen Polyethylens enthält, wobei sich die Angaben in Gew.-% jeweils auf das Gewicht der inneren Deckschicht beziehen, dadurch gekennzeichnet, daß die innere Deckschicht eine Siegelanspringtemperatur II von 80 bis 110°C hat, wobei die Siegelanspringtemperaturen I und II jeweils an einer Folie gemessen werden, in dem zwei geschnittene Folienstreifen mit den zu prüfenden Deckschichten aufeinandergelegt und bei verschiedenen Temperaturen mit einem Siegeldruck von 10 N/cm² und einer Siegeldauer von 0,5 s gesiegelt werden und aus den gesiegelten Proben Prüfstreifen von 15 mm Breite geschnitten werden und die zur Trennung der Prüfstreifen erforderliche Kraft bei einer Abzugsgeschwindigkeit von 200 mm/min bestimmt wird, bis bei einer Temperatur eine Festigkeit von mindestens 1,0 N/15 mm erreicht ist. Die Unteransprüche geben bevorzugte Ausführungsformen der Erfindung an.

Unter der Siegelanspringtemperatur I wird diejenige Siegelanspringtemperatur verstanden, die an einer Referenzfolie gemessen wird, die eine Polypropylen Basisschicht und eine Deckschicht I von ca. 1,5µm aufweist, wobei diese Deckschicht nur aus dem zu bestimmenden Co - oder Terpolymer oder der zu bestimmenden Mischung besteht und auf der Oberfläche nicht oberflächenbehandelt ist. Bei dieser Messung wird Deckschicht I gegen Deckschicht I gesiegelt. Eine zweite Deckschicht kann optional auf der gegenüberliegenden Seite aufgebracht sein, da diese die Siegelanspringtemperatur I nicht beeinflußt.

Unter der Siegelansprintemperatur II wird diejenige Siegelanspringtemperatur verstanden, die für die innere Deckschicht an der zu verwenden Etikettenfolie gemessen wird. Bei dieser Messung wird innere Deckschicht gegen innere Deckschicht gesiegelt.

Im Rahmen der vorliegenden Erfindung wurde gefunden, daß die Folie alle vorstehend genannten Anforderungen beim Einsatz als In-mold Etikett im Tiefziehprozeß erfüllt, wenn die innere Deckschicht das besagte Co- und/oder Terpolymer mit einer niedrigen Siegelanspringtemperatur I enthält und dieses derart mit Polyethylen abgemischt ist, daß die Siegelanspringtemperatur II der inneren Deckschicht im Bereich von 80 bis 110°C, vorzugsweise im Bereich von 90 bis 105°C liegt. Überraschenderweise müssen die Grenzen für die Siegelanspringtemperatur II der inneren Deckschicht sehr eng eingehalten werden, um die gute Haftung und Blasenfreiheit sicherzustellen. Liegt die Siegelanspringtemperatur II der inneren Deckschicht über 110°C verschlechtert sich die Haftung des Etiketts sprunghaft, so daß Folien mit einer Siegelanspringtemperatur II von ca. 115°C praktisch für diese Anwendung unbrauchbar werden. Liegt die Siegelanspringtemperatur II zu niedrig, d.h. unter 80°C, treten Probleme bei der Verarbeitung der Folie auf, wie man sie grundsätzlich von Folien mit klebrigen Deckschichten kennt und beim Entstapeln läßt sich die Folie nicht mehr zuverlässig vereinzeln. Die gute Eignung der Folien mit einer Siegelanspringtemperatur II von 80 - 110°C für den Tiefzieh-Prozess überrascht besonders in Verbindung mit der Tatsache, daß die gleiche Folie als Etikett beim Blasformen eine vergleichsweise schlechte Haftung und Blasen zeigt.

Die Abmischung der Co- und/oder Terpolymeren I mit einem unverträglichen Polyethylen erzeugt in an sich bekannter Weise eine Oberflächerauheit, die die Verarbeitbarkeit und die Entstapelbarkeit ermöglicht. Es war jedoch durchaus fraglich, ob die mikro-Rauheit, die durch die Unverträglichkeit erzeugt wird, ausreichend sein würde, um bei einer vergleichsweise sehr niedrigen Siegelanspringtemperatur II die Verarbeitbarkeit der Folie und die Enstapelbarkeit des Etiketts zu gewährleisten. Es wurde erwartet, daß die Deckschicht auf Grund der sehr niedrigen Siegelanspringtemperatur II trotz Oberflächenrauheit zu Problemen beim Verarbeiten durch Verklebungen, Verblocken etc. führen würde und sich nicht zuverlässig entstapeln ließe. Diese Problem treten jedoch überraschenderweise nicht auf.

Die Einstellung der wesentlichen Siegelanspringtemperatur II von 80 - 110°C kann durch weitere Maßnahmen unterstützt werden, beispielsweise durch Verfahrensmaßnahmen oder die Einarbeitung weiterer Zusatzstoffe, sowie durch Beeinflussung der Siegelansprintemperatur über die Dicke der Deckschicht. Die überraschend gute Verwendbarkeit der Folie im Tiefziehprozeß beruht somit nicht nur auf der Verwendung der genannten niedrig siegelnden Polymeren. Die Erfindung basiert vielmehr auf der Erkenntnis, daß die niedrig siegelnden Polymeren so einzusetzen sind, daß die Siegelanspringtemperatur II der Folie im Bereich von 80 - 110°C liegt, um die gute Verwendbarkeit als In-Mold Tiefziehetikett zu gewährleisten.

Es ist im Prinzip nicht verstanden, warum die Folie mit dieser Siegelanspringtemperatur als Blasform-Etikett eine schlechte Haftung und Blasen aufweist, sich aber beim Tiefziehprozeß vorteilhaft einsetzen läßt. Es war somit insgesamt sehr überraschend, daß diese Folie bei der erfindungsgemäßen Verwendung als Etikett im Thermoform-Verfahren eine sehr gute Haftung zwischen Etikett und Behältnis aufweist, daß keine Blasen auftreten, daß die Folie hervorragend entstapelbar ist, keine Klebeneigung auf Walzen bei der Herstellung zeigt, wenig zum Verblocken bei der Verarbeitung tendiert und somit insgesamt das komplexe Anforderungsprofil vollständig erfüllt, wenn die innere Deckschicht der Folie aus den genannten Polymeren aufgebaut ist und die Siegelanspringtemperatur 80 - 110°C beträgt.

Die innere Deckschicht ist im Sinne der vorliegenden Erfindung diejenige Deckschicht, welche beim Etikettieren dem Behältnis zugewandt ist und beim Etikettieren die Verbindung zwischen dem tiefgezogenen Behälter und dem Etikett bildet.

Die innere Deckschicht enthält als erfindungswesentliche Bestandteile ein Co- und/oder Terpolymer I aus Propylen, Ethylen und/oder Butylen-Einheiten und ein Polyethylen. Im allgemeinen enthält die innere Deckschicht mindestens 30 bis 95 Gew.-%, vorzugsweise 45 bis 80 Gew.-%, insbesondere 50 bis 80 Gew.-% des Co- und/oder Terpolymeren I und 5 bis 70 Gew.-%, vorzugsweise 20 bis 55 Gew.-%, insbesondere 20 bis 55 Gew.-% des Polyethylens, jeweils bezogen auf das Gewicht der inneren Deckschicht.

Geeignete Co- oder Terpolymere I sind aus Ethylen, Propylen oder Butylen-Einheiten aufgebaut, wobei Terpolymere I drei verschiedenen Monomeren enthalten. Die Zusammensetzung der Co- oder Terpolymeren I aus den jeweiligen Monomeren kann innerhalb der nachstehend beschriebenen Grenzen variieren. Im allgemeinen enthalten die Co- und/oder Terpolymeren über 50 Gew.-% Propylen-Einheiten, d.h es sind Propylenco- und/oder Propylenterpolymere mit Ethylen- und/oder Butylen-Einheiten als Comonomere. Copolymere I enthalten im allgemeinen mindestens 60 Gew.-%, vorzugsweise 65 bis 97 Gew.-% Propylen und höchstens 40 Gew.-%, vorzugsweise 3 bis 35 Gew.-% Ethylen oder Butylen als Comonomer. Terpolymere I enthalten im allgemeinen 65 bis 96 Gew.-%, vorzugsweise 72 bis 93 Gew.-% Propylen, und 3 bis 34 Gew.-%, vorzugsweise 5 bis 26 Gew.-% Ethylen und 1 bis 10 Gew.-%, vorzugsweise 2 bis 8 Gew.-% Butylen.

Gegebenenfalls können die vorstehend genannten Co- und Terpolymeren untereinander gemischt werden. Hierbei können die Anteile von Co- zu Terpolymer in beliebigen Grenzen variiert werden, solange derartige Mischungen die wesentliche Siegelanspringtemperatur I von 70 bis 105°C aufweisen. Diese Mischung wird dann in den vorstehend, für die Co- und Terpolymeren beschriebenen Mengen, in der inneren Deckschicht eingesetzt.

Es ist erfindungswesentlich, daß die Anteile an Co- und/oder Terpolymer I und Polyethylen für die innere Deckschicht aus den genannten Bereichen so gewählt werden, daß die Siegelanspringtemperatur II der inneren Deckschicht 110°C nicht überschreitet. Gegebenenfalls sind weitere Maßnahmen wie Oberflächenbehandlung, Schichtdicke und Zusatzstoffe so zu wählen, daß 80 - 110°C für die Siegelanspringtemperatur II erfüllt wird. Im allgemeinen führen Oberflächenbehandlungen zu einer Erhöhung der Siegelanspringtemperatur II, insbesondere bei Corona-Behandlungen. Die Siegelanspringtemperatur II erhöht sich ebenfalls durch Reduzierung der Deckschichtdicke, wenn diese im üblichen Bereich zwischen 0, 5 - 3µm variiert. Additive haben in der Regel einen weniger ausgeprägten Einfluß auf die Siegelanspringtemperatur II, aber beispielsweise können Antiblockmittel in

Abhängigkeit ihrer Teilchengröße Einfluß haben.

Die vorstehend beschriebenen Co- und Terpolymeren I müssen eine Siegelanspringtemperatur I von 70 - 105°C, vorzugsweise 75 bis 100°C, aufweisen, damit in Abmischung mit dem Polyethylen, gegebenenfalls in Verbindung mit weiteren Maßnahmen, eine Siegelanspringtemperatur II von unter 110°C realisiert werden kann. Es sind keine Maßnahmen möglich, die bei Verwendung von Co- oder Terpolymeren mit einer Siegelanspringtemperatur I von über 105°C die Siegelanspringtemperatur so senken, daß für die innere Deckschicht eine Siegelanspringtemperatur II von <110°C resultiert. Die Siegelanspringtemperatur I von höchstens 105°C der Co- und/oder Terpolymeren ist daher erfind ungswesentlich.

Unter der Siegelanspringtemperatur I der Co- und Terpolymeren I wird im Sinne der vorliegenden Erfindung diejenige Siegelanspringtemperatur verstanden, welche an einer biaxial verstreckten Folie aus einer Polypropylen-Basisschicht mit einer ca. 1,5µm dicken Deckschicht aus 100 Gew.-% des jeweiligen Co- oder Terpolymeren oder deren Mischung besteht. Für die Bestimmung dieses Wertes sollte diese Folie nicht oberflächenbehandelt sein, da diese den Wert der Siegelanspringtemperatur I beeinflussen kann. Die Deckschicht sollte darüber hinaus keine üblichen Additive wie Antiblockmittel oder Gleitmittel enthalten, welche die Siegelanspringtemperatur I beeinflussen können. Die Bestimmung sollte mit einer Mindestdicke der Deckschicht durchgeführt werden, bei der der Wert von den üblichen Dickenschwankungen unabhängig ist, im allgemeinen zwischen 1 und 2µm. Die Siegelanspringtemperatur I selbst wird an dieser Referenzfolie wie bei den Meßmethoden im Einzelnen beschrieben bestimmt.

Der Schmelzindex der Co- und/oder Terpolymeren beträgt im allgemeinen 0,1 bis 20 g/10min (190°C, 21,6N), vorzugsweise 0,1 bis 15 g/10min. Der Schmelzpunkt kann im allgemeinen in einem Bereich von 70 bis 140°C liegen. In einer bevorzugten Ausführungsform werden Co- und/oder Terpolymere eingesetzt, deren Schmelzpunkt mindestens 105 bis 140°C, vorzugsweise 110 bis 135°C beträgt. Diese Ausführungsformen zeichnen sich durch eine besonders gute Verarbeitbarkeit sowohl der Herstellung als auch bei der Verwendung der Folie aus. Es wurde gefunden, daß ein vergleichsweise hoher Schmelzpunkt von beispielsweise 110 - 135°C in Verbindung mit einer niedrigen Siegelanspringtemperatur I des Co- oder Terpolymeren von 75 bis 105°C die Klebrigkeit und Blockneigung der Folie soweit herabsetzt, daß die Folie nicht mit Walzen verklebt und sich gut entstapeln lässt, aber gleichzeitig die ausgezeichnete Haftung und Blasenfreiheit beim Tiefziehen aufweist.

Die zweite erfindungswesentliche Komponente der inneren Deckschicht ist ein Polyethylen, welches mit den vorstehend beschriebenen Co- und/oder Terpolymeren unverträglich ist. Unverträglich bedeutet in diesem Zusammenhang, daß durch die Mischung der Co- und/oder Terpolymeren I mit dem Polyethylen eine Oberflächenrauheit gebildet wird. Die Oberflächenrauheit Rz liegt im allgemeinen in einem Bereich von 2,0 - 6µm, vorzugsweise 3 - 5µm bei einem Cut-off von 0,25mm. Geeignete Polyethylene sind beispielsweise HDPE oder MDPE. Das HDPE weißt im allgemeinen die nachstehend beschriebenen Eigenschaften auf, beispielsweise einen MFI (50 N/190 °C) von größer 0,1 bis 50 g/10 min, vorzugsweise 0,6 bis 20 g/10min, gemessen nach DIN 53 735 und eine Viskositätszahl, gemessen nach DIN 53 728, Teil 4, oder ISO 1191, im Bereich von 100 bis 450 cm³/g, vorzugsweise 120 bis 280 cm³/g. Die Kristallinität beträgt im allgemeinen 35 bis 80 %, vorzugsweise 50 bis 80 %. Die Dichte, gemessen bei 23 °C nach DIN 53479, Verfahren A, oder ISO 1183, liegt im Bereich von >0,94 bis 0,96 g/cm³. Der Schmelzpunkt, gemessen mit DSC (Maximum der Schmelzkurve, Aufheizgeschwindigkeit 20 °C/min), liegt zwischen 120 und 140 °C. Geeignetes MDPE hat im allgemeinen einen MFI (50 N/190 °C) von größer 0,1 bis 50 g/10 min, vorzugsweise 0,6 bis 20 g/10min, gemessen nach DIN 53 735. Die Dichte, gemessen bei 23 °C nach DIN 53 479, Verfahren A, oder ISO 1183, liegt im Bereich von >0,925 bis 0,94 g/cm³. Der Schmelzpunkt, gemessen mit DSC (Maximum der Schmelzkurve, Aufheizgeschwindigkeit 20 °C/min), liegt zwischen 115 und 130 °C.

Gegebenenfalls kann die innere Deckschicht weitere olefinische Polymere in geringen Mengen enthalten, soweit dadurch nicht die Funktionalität, insbesondere die erfindgswesentliche Siegelanspringtemperatur von 80 - 100°C gestört wird. Hier kommen beispielsweise Propylen Co- oder Terpolymere in Frage die eine Siegelanspringtemperatur von über 105°C haben und beispielsweise über Additiv-Batche in die innere Deckschicht eingearbeitet werden.

Für die innere Deckschicht werden bevorzugt Propylen-Butylen-Copolymere in Abmischung mit MDPE oder HDPE eingesetzt. Vorzugsweise beträgt der Butylengehalt der Copolymeren 5 bis 20 Gew.-% und der Schmelzpunkt liegt in einem Bereich von 110 - 135°C. Besonders vorteilhaft wird die Oberfläche dieser inneren Deckschicht einer Corona-Behandlung unterworfen.

Die Schichtdicke der inneren Deckschicht beträgt im allgemeinen 2 - 10µm, vorzugsweise 2,5 bis 8 µm, insbesondere 3 bis 6 µm. Eine erhöhte Deckschichtdicke von mindestens 2,5µm trägt vorteilhaft zur verbesserten Haftung bei.

Die innere Deckschicht kann zusätzlich übliche Additive wie Neutralisationsmittel, Stabilisatoren, Antistatika, Antiblockmittel und/oder Gleitmittel in jeweils wirksamen Mengen enthalten. Die nachstehenden Angaben in Gew.-% beziehen sich jeweils auf das Gewicht der inneren Deckschicht. Art und Menge derartiger Additive sollte so gewählt werden, daß die Siegelanspringtemperatur II nicht derart angehoben wird, daß sie über 110°C liegt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen oder vernetzte Polymere wie vernetztes Polymethylmethacrylat oder vernetzte Siliconöle. Siliciumdioxid und Calciumcarbonat sind bevorzugt. Die mittlere Teilchengröße liegt zwischen 1 und 6 µm, insbesondere 2 und 5 µm. Die wirksame Menge an Antiblockmittel liegt im Bereich von 0,1 bis 5 Gew.-%, vorzugsweise 0,5 bis 3 Gew.-%, insbesondere 0,8 bis 2 Gew.-%.

Gleitmittel sind höhere aliphatische Säureamide, höhere aliphatische Säureester und Metallseifen sowie Polydimethylsiloxane. Die wirksame Menge an Gleitmittel liegt im Bereich von 0,01 bis 3 Gew.-%, vorzugsweise 0,02 bis 1 Gew.-% bezogen auf die innere Deckschicht. Besonders geeignet ist der Zusatz von 0,01 bis 0,3 Gew.-% aliphatischer Säureamide, wie Erucasäureamid oder 0,02 bis 0,5 Gew.-% von Polydimethylsiloxanen, insbesondere Polydimethylsiloxane mit einer Viskosität von 5 000 bis 1 000 000 mm2/s.

Die vorstehend beschriebene innere Deckschicht kann direkt auf die opake Basisschicht aufgebracht werden oder die Folie weist zwischen der opaken Basisschicht und der erfindungswesentlichen inneren Deckschicht zusätzlich eine Zwischenschicht auf. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die Basisschicht der Folie enthält mindestens 70 Gew.-%, vorzugsweise 75 bis 99 Gew.%, insbesondere 80 bis 98 Gew.-%, jeweils bezogen auf das Gewicht der Basisschicht, Polyolefine bzw. Propylenpolymeren, vorzugsweise Propylenhomopolymere und vakuoleninitierende Füllstoffe.

Im allgemeinen enthält das Propylenpolymer mindestens 90 Gew.-%, vorzugsweise 94 bis 100 Gew.-%, insbesondere 98 bis <100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere.

Bevorzugt sind isotaktische Propylenhomopolymere mit einem Schmelzpunkt von 140 bis 170 °C, vorzugsweise von 150 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 0,5 bis 10 Gew.-%, vorzugsweise 2 bis 5 Gew.-% bezogen auf das Ausgangspolymere. Die Molekulargewichtsverteilung des Propylenpolymeren kann variieren. Das Verhältnis des Gewichtsmittels Mw zum Zahlenmittel Mn liegt im allgemeinen zwischen 1 und 15, vorzugsweise bei 2 bis 10, ganz besonders bevorzugt bei 2 bis 6. Eine derartig enge Molekulargewichtsverteilung des Propylenhomopolymeren der Basisschicht erreicht man beispielsweise durch dessen peroxidischen Abbau oder durch Herstellung des Polypropylens mittels geeigneter Metallocenkatalysatoren.

Die opake Basisschicht enthält vakuoleninitierende Füllstoffe in einer Menge von maximal 30 Gew.%, vorzugsweise 1 bis 15 Gew.-%, insbesondere 2 bis 10 Gew.-%, bezogen auf das Gewicht der Basisschicht. Zusätzlich zu den vakuoleninitierenden Füllstoffen kann die Basisschicht Pigmente enthalten, beispielsweise in einer Menge von 0,5 bis 10 Gew.-%, vorzugsweise 1 bis 8 Gew.-%, insbesondere 1 bis 5 Gew.-%. Die Angaben beziehen sich auf das Gewicht der Basisschicht.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. "Pigmente" haben im allgemeinen einen mittleren Teilchendurchmesser von 0,01 bis maximal 1 µm, vorzugsweise 0,01 bis 0,7 µm, insbesondere 0,01 bis 0,4 µm. Pigmente umfassen sowohl sogenannte "Weißpigmente", welche die Folien weiß einfärben, als auch "Buntpigmente", welche der Folie eine bunte oder schwarze Farbe verleihen. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen die mit der Polymermatrix unverträglich sind und beim Verstrecken der Folien zur Bildung von vakuolenartigen Hohlräumen führen, wobei Größe, Art und Anzahl der Vakuolen von der Größe und der Menge der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben die vakuoleniniziierenden Füllstoffe eine Mindestgröße von 1 µm, um zu einer effektiven, d.h. opak machenden Menge an Vakuolen zu führen. Im allgemeinen beträgt der mittlere Teilchendurchmesser der Teilchen 1 bis 6 µm , vorzugsweise 1,5 bis 5 µm . Der chemische Charakter der Teilchen spielt eine untergeordnete Rolle, sofern Unverträglichkeit vorliegt.

Übliche vakuoleniniziierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen wie Norbomen oder Tetracyclododecen mit Ethylen oder Propylen, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Dichte der Folie kann je nach Zusammensetzung der Basisschicht in einem Bereich von 0,4 bis 0,8g/cm3 variieren. Dabei tragen Vakuolen zu einer Erniedrigung der Dichte bei, wohingegen Pigmente, wie z.B. TiO2 auf Grund des höheren spezifischen Gewichts die Dichte der Folie erhöhen. Vorzugsweise beträgt die Dichte der Folie 0,5 bis 0,75 g/cm3.

Zusätzlich kann die Basisschicht übliche Additive wie Neutralisationsmittel, Stabilisatoren, Antistatika und/oder Gleitmittel in jeweils wirksamen Mengen enthalten. Die nachstehenden Angaben in Gew.-% beziehen sich jeweils auf das Gewicht der Basisschicht.

Bevorzugte Antistatika sind Glycerinmonostearate, Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit □-Hydroxy-(C1-C4)-alkylGruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht. Insbesondere geeignete aliphatische Säureamide sind Erucasäureamid und Stearylamid. Der Zusatz von Polydimethylsiloxanen ist im Bereich von 0,02 bis 2,0 Gew.-% bevorzugt, insbesondere Polydimethylsiloxane mit einer Viskosität von 5 000 bis 1 000 000 mm2/s.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische und phosphitische Stabilisatoren wie Tris-2,6-dimethylphenylphosphit. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4 Gew.-%, insbesondere 0,1 bis 0,25 Gew.-% eingesetzt.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m2/g. Im allgemeinen werde 0,02 bis 0,1 Gew.-% zugesetzt.

Die erfindungsgemäße Polyolefinfolie weist vorzugsweise eine zweite, äußere Deckschicht auf der der inneren Deckschicht gegenüberliegenden Seite auf, welche eine gute Haftung gegenüber üblichen Druckfarben, Klebern, sowie Beschichtungen und/oder Lacken zeigt. Auch hier kann gegebenenfalls eine Zwischenschicht angebracht sein (äußere Zwischenschicht). Zur weiteren Verbesserung der Haftung von Druckfarben, Klebern und Beschichtungen ist es bevorzugt eine Corona-, Plasma- oder Flammbehandlung auf der Oberfläche der äußeren Deckschicht durchzuführen.

Die äußere Deckschicht ist im allgemeinen aus Polymeren aus Olefinen mit 2 bis 10 Kohlenstoffatomen aufgebaut. Die äußere Deckschicht enthält im allgemeinen 95 bis 100 Gew.-% Polyolefin, vorzugsweise 98 bis <100Gew.-% Polyolefin, jeweils bezogen auf das Gewicht der Deckschicht/en.

Beispiele für geeignete olefinische Polymere der Deckschicht/en sind Propylenhomopolymere, Co- oder Terpolymere II aus Ethylen-, Propylen- und/oder Butyleneinheiten oder Mischungen aus den genannten Polymeren. Diese Co- oder Terpolymere II enthalten keine Carbonsäuremonomeren (bzw. Ester davon). Es sind Polyolefine. Hierunter sind bevorzugte Polymerisate
statistische Ethylen-Propylen-Copolymere mit einem Ethylengehalt von 1 bis 10 Gew.-%, bevorzugt 2,5 bis 8 Gew.-%, oder
statistische Propylen-Butylen-1-Copolymere mit einem Butylengehalt von 2 bis 25 Gew.%, bevorzugt 4 bis 20 Gew.%, oder
statistische Ethylen-Propylen-Butylen-1-Terpolymere mit einem Ethylengehalt von 1 bis 10 Gew.-% und einem Butylen-1-Gehalt von 2 bis 20 Gew.-%, oder
eine Mischung oder ein Blend aus Ethylen-Propylen-Butylen-1-Terpolymeren und Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%. Die Angaben in Gew.% beziehen sich jeweils auf das Gewicht des Polymeren.

Die in der äußeren Deckschicht eingesetzten vorstehend beschriebenen Co- und/oder Terpolymeren II weisen im allgemeinen einen Schmelzflußindex von 1,5 bis 30 g/10 min, vorzugsweise von 3 bis 15 g/10 min, auf. Der Schmelzpunkt liegt im Bereich von 120 bis 145 °C. Das vorstehend beschriebene Blend aus Co- und Terpolymeren II hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Gegebenenfalls können alle vorstehend beschriebenen Deckschichtpolymeren peroxidisch oder auch thermooxidativ abgebaut sein, wobei der Abbaufaktor im allgemeinen in einem Bereich von 1 bis 15, vorzugsweise 1 bis 8 liegt.

Gegebenenfalls können der/den äußeren Deckschicht/en die vorstehend beschriebenen Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der Deckschicht.

Geeignete Antiblockmittel sind bereits im Zusammenhang mit der inneren Deckschicht beschrieben. Diese Antiblockmittel sind auch für die äußere Deckschicht geeignet. Die bevorzugte Menge an Antiblockmittel liegt für die äußere Deckschicht im Bereich von 0,1 bis 2 Gew.-%, vorzugsweise 0,1 bis 0,8 Gew.-%.

Die Dicke der äußeren Deckschicht ist im allgemeinen größer als 0,1 µm und liegt vorzugsweise im Bereich von 0,1 bis 5 µm, insbesondere 0,3 bis 2 µm.

In einer besonders bevorzugten Ausführungsform wird die Oberfläche der äußeren Deckschicht Corona-, Plasma- oder Flamm-behandelt. Diese Behandlung verbessert die Hafteigenschaften der Folienoberfläche für eine anschließende Dekoration und Bedruckung, d.h. die Benetzbarkeit mit und Haftung von Druckfarben und sonstigen Dekorationsmitteln zu gewährleisten.

Die erfindungsgemäße Folie umfaßt mindestens die vorstehend beschriebene Basisschicht und die innere Deckschicht, sowie vorzugsweise auf der gegenüberliegenden Oberfläche eine zweite, äußere Deckschicht aufgebracht. Vorzugsweise kann/können einseitig eine oder beidseitig Zwischenschicht/en zwischen der Basis- und der/den Deckschicht/en vorhanden sein. Somit sind zwei-, drei-, vier und fünfschichtige Ausführungsformen möglich.

Die Zwischenschicht/en kann/können aus den für die Basisschicht bzw. für die Deckschichten beschriebenen olefinischen Polymeren, vorzugsweise Propylenpolymeren aufgebaut sein. Die Zwischenschicht/en kann/können die für die einzelnen Schichten beschriebenen üblichen Additive wie Antistatika, Neutralisationsmittel, Gleitmittel und/oder Stabilisatoren enthalten. Die Dicke dieser Zwischenschicht ist größer als 0,5 µm und liegt vorzugsweise im Bereich von 0,6 bis 6 µm, insbesondere 1 bis 4 µm.

Die Zwischenschicht, die in einer bevorzugten Ausführungsform zwischen der äußeren Deckschicht und der Basisschicht aufgebracht sein kann (nachstehend äußere Zwischenschicht), trägt zu einem hohen Glanz auf der Außenseite des opaken Etiketts bei, insbesondere ungefüllte (d.h. ohne vakuoleninitierende Füllstoffe und ohne TiO2) äußere Zwischenschichten aus Propylenhomopolymer. Für Ausführungsformen bei denen ein weißes oder opakes Erscheinungsbild (hohe Deckkraft) des Etiketts gewünscht ist enthält die äußere Zwischenschicht vakuoleniniziierenden Füllstoffen und/oder Pigmente, insbesondere TiO2, beispielsweise in einer Menge von 2 bis 8 Gew.-%. Die Dicke dieser äußeren Zwischenschicht ist größerals 0,3 µm und liegt vorzugsweise im Bereich von 1,0 bis 15 µm, insbesondere 1,5 bis 10 µm.

Die Gesamtdicke der erfindungsgemäßen Etikettenfolie kann innerhalb weiter Grenzen variieren und richtet sich nach dem beabsichtigten Einsatz. Sie beträgt vorzugsweise 15 bis 150 µm, insbesondere 20 bis 100 µm, vorzugsweise 25 bis 90 µm. Dabei macht die Basisschicht etwa 40 bis 99 % der Gesamtfoliendicke aus.

Die Erfindung betrifft weiterhin ein Verfahren zur Herstellung der erfindungsgemäßen Polyolefinfolie nach dem an sich bekannten Coextrusionsverfahren. Im Rahmen dieses Verfahrens werden die den einzelnen Schichten der Folie entsprechenden Schmelzen gleichzeitig und gemeinsam durch eine Flachdüse coextrudiert, die so erhaltene Folie zur Verfestigung auf einer oder mehreren Walze/n abgezogen, die mehrschichtige Folie anschließend gestreckt (orientiert), die gestreckte Folie thermofixiert und gegebenenfalls an der zur Behandlung vorgesehenen Oberflächenschicht plasma-, corona- oder flammbehandelt.

Eine biaxiale Streckung (Orientierung) wird sequentiell oder simultan durchgeführt. Die sequentielle Streckung wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Die weitere Beschreibung der Folienherstellung erfolgt am Beispiel einer Flachfolienextrusion mit anschließender sequentialer Streckung.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 10 bis 50°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 70 bis 130 °C, vorzugsweise 80 bis 110°C, zweckmäßigerweise mit Hilfe zweier entsprechend dem angestrebten Streckverhältnis verschieden schnellaufender Walzen durchführen und das Querstrecken vorzugsweise bei einer Temperatur von 120 bis 180 °C mit Hilfe eines entsprechenden Kluppenrahmens. Die Längsstreckverhältnisse liegen im Bereich von 3 bis 8 vorzugsweise 4 bis 6. Die Querstreckverhältnisse liegen im Bereich von 5 bis 10, vorzugsweise 7 bis 9.

An die Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Bevorzugt wird/werden nach der biaxialen Streckung eine oder beide Oberfläche/n der Folie nach einer der bekannten Methoden plasma-, corona- oder flammbehandelt. Die Behandlungsintensität liegt im allgemeinen im Bereich von 35 bis 50 mN/m, vorzugsweise 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im Wesentlichen unpolaren Polymermatrix entstehen.

Die Oberflächenbehandlung wie z.B. Corona-Behandlung kann sowohl sofort bei der Herstellung der Etikettenfolie wie auch zu einem späteren Zeitpunkt, z.B. unmittelbar vor dem Etikettiervorgang, erfolgen.

Erfindungsgemäß wird die Etikettenfolie in Tiefzieh-Verfahren für die Etikettierung von Behältern aus Kunststoffen eingesetzt, wobei keine Kleber- oder Haftvermittler, Beschichtungen oder ähnliche Hilfsmittel nach der Folienherstellung in einem separaten Arbeitsschritt auf die innere Oberfläche aufgebracht werden müssen. Des weiteren ist keine Prägung der inneren Oberfläche notwendig.

Die zu etikettierenden Behälter aus thermoplastischem Polymer werden aus Platten (sogenannten Sheets) durch Tiefziehen ausgeformt. Je nach den Anforderungen an den Behälter kommen als thermoplastische Polymere für den Behälter beispielsweise Polypropylen (PP) oder Polyethylen hoher bzw. niedriger Dichte (HD-PE bzw. LD-PE oder LLD-PE), in Einzelfällen auch Mischungen aus diesen Polymeren zum Einsatz. Hinsichtlich der Behälterform bestehen keine Einschränkungen, soweit es sich um Behältnisse handelt die durch den Thermoform-Prozess hergestellt werden können. Hierunter fallen insbesondere auch becher- oder schalenförmige Behältnisse.

Zur Etikettierung der Behälter mit der erfindungsgemäßen Etikettenfolie wird das Etikett vor der Formung des Behälters zugeschnitten und gestapelt. Das einzelne Etikett wird dem Stapel entnommen und so in die Form eingelegt, daß die, im allgemeinen bedruckte, Außenseite des Etiketts mit der Form in Kontakt steht und später die Sichtseite des Behälters bildet. Die Innenseite des Etiketts ist dem Behälter zugewendet. Bei der Formung des Behälters, d.h. beim Tiefziehen verbindet sich die innere Oberfläche des Etiketts unter Einwirkung von Druck und Temperatur mit dem Behälter.

Bei geeigneten Tiefziehverfahren werden dicke Folien aus thermoplastischen Polymeren bei erhöhter Temperatur unter Einwirkung von pneumatischen Kräften oder durch mechanische Einwirkung von Formwerkzeugen plastisch geformt. Die plastische Formung mittels pneumatischer Kräfte kann durch Unterdruck (Tiefziehen) oder Überdruck, d.h. Druckluft erfolgen. Derartige Verfahren sind im Stand der Technik bekannt und werden im englischen Sprachgebrauch als "thermoforming" bezeichnet. Die Verfahren und ihre Ausgestaltung im Einzelnen sind beispielsweise beschrieben in Rosato's Plastics Encyclopedia and Dictionary, Seite 755 bis 766, auf welche hiermit ausdrücklich Bezug genommen wird.

Plastische Formung unter Einwirkung pneumatischer Kräfte erfolgt beispielsweise mittels Unterdruck nach dem üblicherweise die tiefzuziehende Folie mittels eines Oberstempels vorgeformt wurde. Vor dem eigentlichen Tiefziehen wird die Etikettenfolie in die Form eingelegt und die Tiefziehfolie so darüber gelegt, daß der Formkörper luftdicht abgeschlossen wird. An den Formkörper wird in geeignetere Weise ein Unterdruck oder Vakuum angelegt. Aufgrund der Druckdifferenz wirkt ein Sog auf die Tiefziehfolie. Ein Heizelement ist über der Folienoberfläche angebracht und erwärmt die Folie bis sie sich in Richtung des Formkörpers verformt. Temperatur, Unterdruck werden bei dem Prozeß so gewählt, daß sich die Folie an den Formkörper mit dem eingelegten Etikett formschlüssig anlegt und sich dabei mit dem Etikett verbindet. Nach Beseitigen der Druckdifferenz und Abkühlung kann der etikettierte tiefgezogene Behälter entnommen werden.

Zur Charakterisierung der Rohstoffe und der Folien wurden die folgenden Meßmethoden benutzt:

### Schmelzflußindex

Der Schmelzflußindex der Propylenpolymeren wurde nach DIN 53 735 bei 2,16 kg Belastung und 230 °C gemessen und bei 190°C und 2,16 kg für Polyethylene.

### Schmelzpunkte

DSC-Messung, Maxima der Schmelzkurve, Aufheizgeschwindigkeit 20 K/min.

### Dichte

Die Dichte wird nach DIN 53 479, Verfahren A, bestimmt.

### Bestimmung der Siegelanspringtemperatur (SIT)

Es werden zwei Folienstreifen geschnitten und mit den jeweils zu prüfenden Deckschichten aufeinander gelegt. Mit dem Siegelgerät HSG/ETK der Fa. Brugger werden heissgesiegelte Proben (Siegelnaht 20 mm x 100 mm) hergestellt, indem die aufeinandergelegten Streifen bei unterschiedlichen Temperaturen mit Hilfe zweier beheizter Siegelbacken bei einem Siegeldruck von 10 N/cm2 und einer Siegeldauer von 0,5 s gesiegelt werden. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur ist die Temperatur, bei der eine Siegelnahtfestigkeit von mindestens 1,0 N/15 mm erreicht wird.

### Rauheitsmessung

Als Maß für die Rauheit der Innenseiten der Folien wurden die Rauheitswerte Rz der Folien wurden in Anlehnung an DIN 4768 Teil 1 und DIN 4777 sowie DIN 4772 und 4774 mittels eines Perthometer Typ S8P der Firma Feinprüf Perthen GmbH, Göttingen, nach dem Tastschnitt-Verfahren gemessen. Der Meßkopf, ein Einkufentastsystem gemäß DIN 4772, war mit einer Tastspitze mit dem Radius 5 µm und einem Flankenwinkel von 90 ° bei einer Auflagekraft von 0,8 bis 1,12 mN sowie einer Gleitkufe mit Radius 25 mm in Gleitrichtung ausgestattet. Der vertikale Meßbereich wurde auf 62,5 µm, die Taststrecke auf 5,6 mm und der Cut-off des RC-Filters gemäß DIN 4768/1 auf 0,25 mm eingestellt.

Die Erfindung wird nunmehr durch die nachfolgenden Beispiele erläutert.

### Beispiel 1

Nach dem Coextrusionsverfahren wurde aus einer Breitschlitzdüse eine fünfschichtige Vorfolie extrudiert. Diese Vorfolie wurde auf einer Kühlwalze abgezogen, verfestigt und anschließend in Längs- und Querrichtung orientiert und abschließend fixiert. Die Oberfläche der äußeren Deckschicht wurde mittels Corona zur Erhöhung der Oberflächenspannung vorbehandelt. Die fünfschichtige Folie hatte einen Schichtaufbau erste Deckschicht/erste Zwischenschicht/Basisschicht/zweite Zwischenschicht/zweite Deckschicht. Die einzelnen Schichten der Folie hatten die folgende Zusammensetzung:
Erste Deckschicht (1,0 µm):
   100 Gew.-% Ethylen-Propylencopolymerisat mit einem Ethylen-Anteil von 4 Gew.-% (bezogen auf das Copolymer) und einem Schmelzpunkt von 135°C; und einem Schmelzflußindex von 7,3g/10 min bei 230 °C und 2,16 kg Belastung (DIN 53 735) Erste Zwischenschicht (4µm)
   96 Gew.-% Propylenhomopolymerisat (PP) mit einem n-heptanlöslichen Anteil von 4,5 Gew.-% (bezogen auf 100 % PP) und einem Schmelzpunkt von 165 °C; einem Schmelzflußindex von 3,2 g/10 min bei 230 °C und 2,16 kg Belastung (DIN 53 735) 4% Gew.-% TiO2 mit einem mittleren Teilchendurchmesser von 0,1 bis 0,3 µm Basisschicht
   89,6 Gew.-% Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735) und
   10 Gew.-% Calciumcarbonat mit einem mittleren Teilchendurchmesser von 3,5 µm 0,2 Gew.-% tertiäres aliphatische Amin als Antistatikum (Armostat 300)
   0,2 Gew.-% Erucasäureamid als Gleitmittel (ESA)

### Zweite Zwischenschicht (4µm)

100 Gew.-% Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735)

Zweite Deckschicht (3µm):
50 Gew.-% Propylen-Butylen-Copolymerisat mit einem Butylen-Anteil von 25,7 Mol % (bezogen auf das Copolymer) und einem Schmelzpunkt von 110°C; und einem Schmelzflußindex von 7,0 g/10 min bei 230 °C und 2,16 kg Belastung (DIN 53 735). Die Siegelanspringtemperatur I des Propylen-Butylen-Copolymeren beträgt bei einer Deckschichtdicke von ca. 1,5 µm 82°C
50 Gew.-% Polyethylen mit einer Dichte von 0,934 g/cm3 und einem Schmelzflußindex (190°C und 50 N) 0,8 g/10min

Alle Schichten der Folie enthielten zusätzlich Stabilisator und Neutralisationsmittel in üblichen Mengen.

Im einzelnen wurde die folgenden Bedingungen und Temperaturen bei der Herstellung der Folie gewählt wurden:

| | |
|---|---|
| Extrusion: | Extrusionstemperatur ca. 250 °C |
| Abkühlwalze: | Temperatur 25°C, |
| Längsstreckung: | T = 120 °C |
| Längsstreckung um den | Faktor 5 |
| Querstreckung: | T = 150 °C |
| Querstreckung um den | Faktor 8 |
| Fixierung | T = 133°C |

Die Folie wurde auf der Oberfläche der äußeren Deckschicht mittels Corona oberflächenbehandelt. Die Folie hatte eine Dichte von 0,58g/cm³ und eine Dicke von 40 µm.

### Beispiel 2

Es wurde eine Folie nach Beispiel 1 hergestellt. Im Unterschied zu Beispiel 1 enthielt die zweite Deckschicht 75 Gew.-% Propylen-Butylen-Copolymerisat mit einem Butylen-Anteil von 30 Mol.-% (bezogen auf das Copolymer) und einem Schmelzpunkt von 130°C; und einem Schmelzflußindex von 5,0 g/10 min bei 230 °C und 2,16 kg Belastung (DIN 53 735) und 25 Gew.-% des gleichen Polyethylens. Die Siegelanspringtemperatur I des Propylen-Butylen-Copolymeren beträgt bei einer Deckschichtdicke von ca. 1,5µm 76°C. Die übrige Zusammensetzung und die Verfahrensbedingungen bei der Herstellung der Folie wurden nicht verändert.

### Beispiel 3:

Es wurde eine Folie wie in Beispiel 1 beschrieben hergestellt. Im Unterschied zu Beispiel 1 wurde die Folie auch auf der Oberfläche der inneren Deckschicht mittels Corona oberflächenbehandelt. Die übrige Zusammensetzung und die Verfahrensbedingungen bei der Herstellung der Folie wurden nicht verändert.

### Vergleichsbeispiel 1:

Es wurde eine Folie nach Beispiel 1 hergestellt. Im Unterschied zu Beispiel 1 enthielt die zweite Deckschicht jetzt 50 Gew.-% Propylen-Ethylen-Copolymerisat mit einem Ethylen-Anteil von 4 Gew.-% (bezogen auf das Copolymer) und einem Schmelzpunkt von 136°C; und einem Schmelzflußindex von 7,3 g/10 min bei 230 °C und 2,16 kg Belastung (DIN 53 735) und 50 Gew.-% des gleichen Polyethylens wie in Beispiel 1 beschrieben. Die Siegelanspringtemperatur I des Propylen-EthylenCopolymeren beträgt bei einer Deckschichtdicke von ca. 1,5µm 115°C. Die übrige Zusammensetzung und die Verfahrensbedingungen bei der Herstellung der Folie wurden nicht verändert.

### Vergleichsbeispiel 2:

Es wurde eine Folie nach Beispiel 2 hergestellt. Im Unterschied zu Beispiel 2 enthielt die zweite Deckschicht jetzt 100 Gew.-% des gleichen Propylen-Butylen-Copolymerisat und kein Polyethylen.

### Vergleichsbeispiel 3:

Es wurde eine Folie nach Beispiel 2 hergestellt. Im Unterschied zu Beispiel 2 enthielt die zweite Deckschicht jetzt 25 Gew.-% Propylen-Butylen-Copolymerisat und 75 Gew.-% des Polyethylens wie in Beispiel 2 beschrieben. Die übrige Zusammensetzung und die Verfahrensbedingungen bei der Herstellung der Folie wurden nicht verändert.

### Vergleichsbeispiel 4:

Es wurde eine Folie nach Beispiel 1 hergestellt. Im Unterschied zu Beispiel 1 betrug die Deckschicht dicke jetzt 1,5µm. Die übrige Zusammensetzung und die Verfahrensbedingungen bei der Herstellung der Folie wurden nicht verändert.

### Vergleichsbeispiel 5:

Es wurde eine Folie nach Beispiel 2 hergestellt. Im Unterschied zu Beispiel 2 wurde die Folie auch auf der Oberfläche der inneren Deckschicht mittels Corona oberflächenbehandelt. Die übrige Zusammensetzung und die Verfahrensbedingungen bei der Herstellung der Folie wurden nicht verändert.

| Nr. | Beispiel | SIT I / SMP des Co-polymeren | SIT II der inneren Deckschicht | Schichtdicke der inneren Deckschicht |
|---|---|---|---|---|
| Bsp. 1 | 50% C3C4 mit 25%C4 50% PE ohne Corona | 82°C | 95°C | 3µm |
| Bsp. 2 | 75 % C3C4; 27%C4 25 % PE ohne Corona | 76°C | 106°C | 3µm |
| Bsp. 3 | 50% C3C4 mit 25%C4 50 % PE mit Corona | 82°C | 104°C | 3µm |
| VB 1 | 50% C3C4; 27%C4 50% PE ohne Corona | 115°C | 121 °C | 3µm |
| VB 2 | 100% C3C4; 27%C4 ohne Corona | 76°C | 76°C | 3µm |
| VB 3 | 25% C3C4; 27%C4 75% PE ohne Corona | 76°C | 125°C | 3µm |
| VB 4 | 50% C3C4 mit 25%C4 50% PE Ohne Corona dünn | 82°C | 115°C | 1,5µm |
| VB 5 | 75 % C3C4; 27%C4 25 % PE mit Corona | 76°C | 136°C | 3µm |

### Erfindungsgemäße Verwendung

Die Folien gemäß den Beispielen und den Vergleichsbeispielen wurden als Etikettenfolien beim Tiefziehen eines runden, konischen Joghurtbechers eingesetzt. Hierfür wurden die Etiketten in einer Bogenform ausgestanzt, die Zuschnitte gestapelt und in einem Magazin an der Tiefziehanlage bereitgestellt. Die Tiefziehanlage war mit einem Oberstempel als Formungshilfe ausgerüstet. Die Etiketten wurden durch Ansaugung aus dem Magazin entnommen und um einen Hilfskern gewickelt. Das so vorgeformte Etikett wurde mittels Hilfskern in die Form eingelegt, und durch Ansaugung gehalten. Die äußere, bedruckte Deckschicht stand mit der Form in Kontakt. Die innere Deckschicht war dem zu formenden Behälter zugewandt.

Eine 600 µm dicke PP Tiefziehfolie wurde mittels IR Strahler oder Kontaktheizung bis in den Bereich ihrer plastischen Verformbarkeit erwärmt (>165°C). Durch Absenken des Oberstempels und Anlegen eines Vakuums an der Unterseite und Druckluft von der Oberseite wurde die Tiefziehfolie zu einem Becher ausgeformt, wobei sie sich mit dem eingelegten Etikett verbindet.

Die etikettierten Behälter wurden hinsichtlich Haftung und Optik überprüft. Es zeigte sich, das die Folien nach den Vergleichsbeispielen deutliche Blasenbildung zwischen Folie und Behälterwandung und hierdurch eine beeinträchtigte Haftung aufwiesen.

Die Folien gemäß den Beispielen 1-3 zeigten ein homogenes Aussehen der Etikettenoberfläche ohne Blasenbildung oder andere optische Fehler, sowie eine gute Haftung des Etiketts auf der Behälteroberfläche.

### Vergleichsbeispiel:

Die Folien nach den Beispielen 1 bis 3 wurden auf Etikettenform zugeschnitten, an einer Blasformmaschine bereitgestellt und vor dem Blasformprozeß in die Form eingelegt. Eine Blasformmaschine wurde mit einem Werkzeug für eine bauchige Flasche bestückt. Die Blasformmachine wurde mit HD-PE Blasformware mit einem MFI von 0,4 g/10min beschickt. Das HDPE wurde bei einer Masse Temperatur von ca. 200°C durch eine Ringdüse schlauchförmig extrudiert wurde. Die Form wurde geschlossen und dabei das untere Ende des Schmelzeschlauches versiegelt. In das obere Ende des Schlauches wurde eine Lanze eingefahren und der Schlauch mit einem Druck von 10 bar in der Form aufgeblasen. Anschließend wurde die Form auseinander gefahren und der etikettierte Behälter entnommen.

Der etikettierte Behälter zeigte mehrere Fehlstellen in Form von eingeschlossenen Luftblasen und mangelhafte Haftung im Randbereich des Etiketts.

## Patentansprüche

1. Verwendung einer mehrschichtigen opaken biaxial orientierten Polyolefinfolie als In-Mold Etikett beim Tiefziehen aus einer vakuolenhaltigen Basisschicht und mindestens einer inneren Deckschicht, welche mindestens 30 - 95 Gew.-% eines Co- und/oder Terpolymeren I mit einem Siegelanspringtemperatur I von 70 - 105°C und 5 bis 70 Gew.% eines unverträglichen Polyethylens enthält, wobei sich die Angaben in Gew.-% jeweils auf das Gewicht der inneren Deckschicht beziehen, **dadurch gekennzeichnet, daß** die innere Deckschicht eine Siegelanspringtemperatur II von 80 bis 110°C hat, wobei die Siegelanspringtemperaturen I und II jeweils an einer Folie gemessen werden, in dem zwei geschnittene Folienstreifen mit den zu prüfenden Deckschichten aufeinandergelegt und bei verschiedenen Temperaturen mit einem Siegeldruck von 10 N/cm² und einer Siegeldauer von 0,5 s gesiegelt werden und aus den gesiegelten Proben Prüfstreifen von 15 mm Breite geschnitten werden und die zur Trennung der Prüfstreifen erforderliche Kraft bei einer Abzugsgeschwindigkeit von 200 mm/min bestimmt wird, bis bei einer Temperatur eine Festigkeit von mindestens 1,0 N/15 mm erreicht ist.

2. Verwendung nach Anspruch 1, **dadurch gekennzeichnet, daß** das die innere Deckschicht 45 bis 80 Gew.-% des Co- und/oder Terpolymeren und 20 bis 55 Gew.-% des Polyethylens enthält.

3. Verwendung nach Anspruch 1 oder 2, **dadurch gekennzeichnet, daß** das Co- und/oder Terpolymere ein Propylencopolymer und/oder ein Propylen-Terpolymer ist.

4. Verwendung nach einem der Ansprüche 1 bis 3, **dadurch gekennzeichnet, daß** das Polyethylen ein HDPE oder ein MDPE ist.

5. Verwendung nach einem der Ansprüche 1 bis 4, **dadurch gekennzeichnet, daß** das Copolymer ein Propylen-Butylen-Copolymer ist und das Polyethylen ein MDPE ist.

6. Verwendung nach einem der Ansprüche 1 bis 5, **dadurch gekennzeichnet, daß** das Copolymere oder das Terpolymer einen Schmelzpunkt von 105 bis 140°C aufweist.

7. Verwendung nach einem der Ansprüche 1 bis 6, **dadurch gekennzeichnet, daß** die innere Deckschicht eine Dicke von 2 bis 10µm aufweist

8. Verwendung nach einem der Ansprüche 1 bis 7, **dadurch gekennzeichnet, daß** die Dichte der Folie in einem Bereich 0,2 bis 0,80 g/cm3 liegt.

9. Verwendung nach einem der Ansprüche 1 bis 8, **dadurch gekennzeichnet, daß** zwischen der Basisschicht und der inneren Deckschicht eine Zwischenschicht aus Propylenpolymeren ist.

10. Verwendung nach einem der Ansprüche 1 bis 9, **dadurch gekennzeichnet, daß** auf der der inneren Deckschicht gegenüberliegenden Seite eine zweite bedruckbare Deckschicht aufgebracht ist.

11. Verwendung nach einem der Ansprüche 1 bis 10, **dadurch gekennzeichnet, daß** die Oberflächenrauheit Rz der inneren Deckschicht in einem Bereich von 2,0 - 6µm, vorzugsweise 3 - 5µm bei einem Cut-off von 0,25mm liegt.

12. Verfahren zur Herstellung eines etikettierten Behälters mittels Tiefziehen bei dem ein Etikett in eine Form eingelegt und eine tiefziehbare Dickfolie mittels Heizelemente auf eine Temperatur erwärmt wird, bei der das Polymere thermoplastisch verformbar ist und anschließend die Dickfolie mittels Formwerkzeug oder pneumatisch in eine Form gezogen wird, so daß sich die Folie der Form anpaßt und ein Behälter geformt und gleichzeitig das eingelegte Etikett appliziert wird, **dadurch gekennzeichnet, dass** das Etikett aus einer mehrschichtigen opaken biaxial orientierten Polyolefinfolie aus einer vakuolenhaltigen Basisschicht und mindestens einer inneren Deckschicht, welche mindestens 30 - 95 Gew.-% eines Co- und/oder Terpolymeren I mit einem Siegelanspringtemperatur I von 70 - 105°C und 5 bis 70 Gew.-% eines unverträglichen Polyethylens enthält, wobei sich die Angaben in Gew.-% jeweils auf das Gewicht der inneren Deckschicht beziehen, wobei die innere Deckschicht eine Siegelanspringtemperatur II von 80 bis 110°C hat, wobei die Siegelanspringtemperaturen I und II jeweils an einer Folie gemessen werden, in dem zwei geschnittene Folienstreifen mit den zu prüfenden Deckschichten aufeinandergelegt und bei verschiedenen Temperaturen mit einem Siegeldruck von 10 N/cm² und einer Siegeldauer von 0,5 s gesiegelt werden, aus den gesiegelten Proben Prüfstreifen von 15 mm Breite geschnitten werden und die zur Trennung der Prüfstreifen erforderliche Kraft bei einer Abzugsgeschwindigkeit von 200 mm/min bestimmt wird, bis bei einer Temperatur eine Festigkeit von mindestens 1,0 N/15 mm erreicht ist.

## Claims

1. The use of a multilayer opaque biaxially oriented polyolefin film as an in-mould label for deep-drawing made from a vacuole-containing base layer and at least one inner covering layer, which contains at least 30 - 95 % by weight of a co- and/or terpolymer I with a seal initiation temperature I of 70 - 105 °C and 5 to 70 % by weight of an incompatible polyethylene, wherein the data in % by weight relate in each case to the weight of the inner covering layer, **characterised in that** the inner covering layer has a seal initiation temperature II of 80 to 110 °C, wherein the seal initiation temperatures I and II are each measured on a film, in which two cut film strips are laid on top of one another with the covering layers to be tested and are sealed at different temperatures with a sealing pressure of 10 N/cm² and a sealing duration of 0.5 secs and test strips 15 mm wide are cut from the sealed samples and the force required to separate the test strips is determined at a pull-off speed of 200 mm/min, until a strength of at least 1.0 N/15 mm is reached at a temperature.

2. The use according to claim 1, **characterised in that** the inner covering layer contains 45 to 80 % by weight of the co- and/or terpolymer and 20 to 55 % by weight of the polyethylene.

3. The use according to claim 1 or 2, **characterised in that** the co- and/or terpolymer is a propylene copolymer and/or a propylene terpolymer.

4. The use according to one of the claims 1 to 3, **characterised in that** the polyethylene is an HDPE or an MDPE.

5. The use according to one of the claims 1 to 4, **characterised in that** the copolymer is a propylene-butylene copolymer and the polyethylene is an MDPE.

6. The use according to one of the claims 1 to 5, **characterised in that** the copolymer or terpolymer exhibits a melting point of 105 to 140 °C.

7. The use according to one of the claims 1 to 6, **characterised in that** the inner covering layer exhibits a thickness of 2 to 10 µm.

8. The use according to one of the claims 1 to 7, **characterised in that** the density of the film lies in the range 0.2 to 0.80 g/cm³.

9. The use according to one of the claims 1 to 8, **characterised in that** there is an intermediate layer of propylene polymer between the base layer and the inner covering layer.

10. The use according to one of the claims 1 to 9, **characterised in that** a second printable covering layer is applied to the side opposite the inner covering layer.

11. The use according to one of the claims 1 to 10, **characterised in that** the surface roughness Rz of the inner covering layer lies within the range 2.0 - 6 µm, preferably 3 - 5 µm, with a cut-off of 0.25 µm.

12. A method of producing a labelled container by means of deep-drawing in which a label is laid in a mould and a deep-drawable thick film is heated by means of a heating element to a temperature at which the polymer is thermoplastically mouldable and the thick film is then drawn by means of a moulding tool or pneumatically into a form, so that the form film is adapted and a container is formed and the inserted label is applied at the same time, **characterised in that** the label is made from a multilayer opaque biaxially oriented polyolefin film made from a vacuole-containing base layer and at least one inner covering layer, which contains at least 30 - 95 % by weight of a co- and/or terpolymer I with a seal initiation temperature I of 70 - 105 °C and 5 to 70 % by weight of an incompatible polyethylene, wherein the data in % by weight relate in each case to the weight of the inner covering layer, wherein the inner covering layer has a seal initiation temperature II of 80 to 110 °C, wherein the seal initiation temperatures I and II are each measured on a film, in which two cut film strips are laid on top of one another with the covering layers to be tested and are sealed at different temperatures with a sealing pressure of 10 N/cm² and a sealing duration of 0.5 secs, test strips 15 mm wide are cut from the sealed samples and the force required to separate the test strips is determined at a pull-off speed of 200 mm/min, until a strength of at least 1.0 N/15 mm is reached at a temperature.

## Revendications

1. Utilisation d'une feuille en polyoléfine, qui est multicouche, opaque et biaxialement orientée, en tant qu'étiquette fond de moule lors de l'emboutissage, constituée d'une couche de base contenant des vacuoles et d'au moins une couche de couverture intérieure contenant au moins 30 à 95 % en poids d'un co- et/ou terpolymère I avec une température d'activation du scellage I comprise entre 70 et 105 °C et 5 à 70 % en poids d'un polyéthylène non compatible, les pourcentages en poids étant indiqués par rapport au poids de ladite couche de couverture intérieure, **caractérisée en ce que** ladite couche de couverture intérieure a une température d'activation du scellage II comprise entre 80 et 110 °C, les températures d'activation du scellage I et II étant chacune mesurées sur une feuille en découpant deux bandes de feuille et en les disposant l'une sur l'autre avec leurs couches de couverture à examiner et en les soumettant, à - différentes températures, à un scellage avec une pression de scellage de 10 N/cm² et une durée de scellage de 0,5 s pour ensuite découper les échantillons scellés en éprouvettes d'une largeur de 15 mm et déterminer la force qui est nécessaire pour décoller lesdites éprouvettes, la vitesse de pelage étant de 200 mm/min, jusqu'à ce qu'une température permette d'obtenir une résistance d'au moins 1,0 N/15 mm.

2. Utilisation selon la revendication 1, **caractérisée en ce que** couche de couverture intérieure contient 45 à 80 % en poids dudit co- et/ou terpolymère et 20 à 55 % en poids dudit polyéthylène.

3. Utilisation selon les revendications 1 ou 2, **caractérisée en ce que** ledit co- et/ou terpolymère est un copolymère de propylène et/ou un terpolymère de propylène.

4. Utilisation selon l'une des revendications 1 à 3, **caractérisée en ce que** ledit polyéthylène est un PE-HD ou un PE-MD.

5. Utilisation selon l'une des revendications 1 à 4,**caractérisée en ce que** ledit copolymère est un copolymère de propylène/butylène et ledit polyéthylène est un PE-MD.

6. Utilisation selon l'une des revendications 1 à 5, **caractérisée en ce que** ledit copolymère ou ledit terpolymère présente un point de fusion compris entre 105 et 140 °C.

7. Utilisation selon l'une des revendications 1 à 6, **caractérisée en ce que** ladite couche de couverture intérieure présente une épaisseur comprise entre 2 et 10 µm.

8. Utilisation selon l'une des revendications 1 à 7, **caractérisée en ce que** la densité de ladite feuille est comprise entre 0,2 et 0,80 g/cm³.

9. Utilisation selon l'une des revendications 1 à 8, **caractérisée en ce qu'**une couche intermédiaire en polymères de propylène est disposée entre ladite couche de base et ladite couche de couverture intérieure.

10. Utilisation selon l'une des revendications 1 à 9, **caractérisée en ce qu'**une deuxième couche de couverture imprimable est disposée sur la face opposée à ladite couche de couverture intérieure.

11. Utilisation selon l'une des revendications 1 à 10, **caractérisée en ce que** la rugosité de surface Rz de ladite couche de couverture intérieure est comprise entre 2,0 et 6 µm, de préférence entre 3 et 5 µm, la longueur de base (cut-off) étant de 0,25 mm.

12. Procédé de fabrication d'un récipient étiqueté par emboutissage, dans lequel une étiquette est insérée dans un moule et une feuille épaisse emboutissable est chauffée, au moyen d'éléments de chauffage, à une température à laquelle le polymère thermoplastique est déformable, pour ensuite mettre en forme ladite feuille épaisse, par emboutissage pneumatique ou sur un moule mâle, de façon à ce que ladite feuille épouse la forme, réalisant ainsi en même temps le formage d'une récipient et l'application de l'étiquette insérée, **caractérisé en ce que** ladite étiquette en une feuille en polyoléfine, qui est multicouche, opaque et biaxialement orientée, constituée d'une couche de base contenant des vacuoles et d'au moins une couche de couverture intérieure contenant au moins 30 à 95 % en poids d'un co- et/ou terpolymère I avec une température d'activation du scellage I comprise entre 70 et 105 °C et 5 à 70 % en poids d'un polyéthylène non compatible, les pourcentages en poids étant indiqués par rapport au poids de ladite couche de couverture intérieure, ladite couche de couverture intérieure ayant une température d'activation du scellage II comprise entre 80 et 110 °C, les températures d'activation du scellage I et II étant chacune mesurées sur une feuille en découpant deux bandes de feuille et en les disposant l'une sur l'autre avec leurs couches de couverture à examiner et en les soumettant, à différentes températures, à un scellage avec une pression de scellage de 10 N/cm² et une durée de scellage de 0,5 s pour ensuite découper les échantillons scellés en éprouvettes d'une largeur de 15 mm et déterminer la force qui est nécessaire pour décoller lesdites éprouvettes, la vitesse de pelage étant de 200 mm/min, jusqu'à ce qu'une température permette d'obtenir une résistance d'au moins 1,0 N/15 mm.
